# FASCICULE DE BREVET EUROPEEN

(11) **EP 1 463 644 B1**
(45) Date de publication et mention de la délivrance du brevet: **11.11.2009**
(21) Numéro de dépôt: 03712230.6
(22) Date de dépôt: 09.01.2003
(51) Int. Cl.: B60C 23/00

(54) **ENSEMBLE A ROUE GONFLABLE**
AUFBLASBARE RADANORDNUNG
INFLATABLE WHEEL ASSEMBLY

(30) Priorité: 11.01.2002 FR 0200334
(43) Date de publication de la demande: 06.10.2004
(73) Titulaire: MESSIER-BUGATTI, 78140 Vélizy Villacoublay (FR)
(72) Inventeur: MARIN-MARTINOD, Thierry, F-95690 Nesles-la-Vallée (FR)
(74) Mandataire: Blot, Philippe Robert Emile
(86) Numéro de dépôt international: PCT/FR2003/000057
(87) Numéro de publication internationale: WO 2003/057515

(56) Documents cités:
- DE-A- 2 649 337
- US-A- 5 413 159
- US-A- 6 087 930
- US-A- 6 161 565

## Description

La présente invention concerne un ensemble à roue gonflable, du type comportant une jante et un pneumatique définissant entre eux un espace clos empli d'un gaz sous pression, un réservoir de gaz sous pression et des moyens de connexion sélective du réservoir de gaz sous pression et de l'espace clos défini entre la jante et le pneumatique.

On connaît des véhicules équipés de roues à pneumatiques qui comportent des installations autonomes de gonflage des roues. A cet effet, le véhicule comporte une réserve de gaz sous pression solidaire de la caisse du véhicule. Un ensemble de conduites équipées de vannes relie le réservoir à chaque pneumatique pour permettre de connecter sélectivement l'espace clos délimité à l'intérieur de chaque pneu au réservoir de gaz sous pression. Alternativement le document DE-A-26 49 337 divulgue un reserve de gaz au sein de la jante. Les termes du préambule de revendication 1 s'appuyent sur l'enseignement de ce document.

Du fait de la rotation de la roue, il est nécessaire de prévoir un joint tournant permettant la liaison du réservoir installé sur la caisse du véhicule à l'espace clos délimité par chaque pneumatique rotatif.

Ainsi, les installations autonomes de gonflage nécessitent de recourir à des éléments mécaniques très complexes.

L'invention a pour but de proposer un ensemble à roue permettant un regonflage de la roue et dont la structure est simple.

A cet effet, l'invention a pour objet un ensemble à roue, du type précité, **caractérisé en ce que** le réservoir de gaz sous pression est solidaire en rotation de la jante.

Suivant des modes particuliers de réalisation, l'ensemble à roue comporte l'une ou plusieurs des caractéristiques suivantes :
- le réservoir est empli d'azote ;
- le réservoir est disposé dans l'espace annulaire défini entre le pneumatique et la jante ;
- il comporte une unité de pilotage reliée aux moyens de connexion sélective du réservoir de gaz et de l'espace clos pour leur commutation entre un état passant et un état bloquant ;
- il comporte un capteur de mesure de la pression à l'intérieur dudit espace clos, et ladite unité de pilotage est adaptée pour la commutation desdits moyens de connexion en fonction de la pression dans ledit espace clos ;
- il comporte un capteur de température, et en ce que ladite unité de pilotage est adaptée pour la commutation desdits moyens de connexion en fonction de la température mesurée par le capteur ;
- ladite unité de pilotage comporte :
   une unité de traitement d'informations déportée, indépendante en rotation de la jante ;

   - une unité de commande des moyens de connexion sélective du réservoir et de l'espace clos, ladite unité de commande étant solidaire en rotation de la jante ; et
   - des moyens complémentaires de communication sans fil connectés, d'une part, à ladite unité de traitement d'informations et, d'autre part, à ladite unité de commande pour la transmission d'ordres de commande de ladite unité de traitement d'informations à l'unité de commande ;
- il comporte des moyens complémentaires de communication sans fil connectés, d'une part, au ou à chaque capteur et, d'autre part, à ladite unité de traitement d'informations pour la transmission de valeurs de mesure du ou de chaque capteur à ladite unité de traitement d'informations ;
- lesdits moyens complémentaires de communication comportent un transformateur tournant comportant deux bobinages montés en rotation l'un par rapport à l'autre, l'un des bobinages étant solidaire en rotation de la jante ;
- lesdits moyens complémentaires de communication comportent deux antennes dont l'une est solidaire en rotation de la jante et dont l'autre reliée à l'unité de traitement d'informations est indépendante en rotation de la jante et est située à distance de celle-ci.
- il comporte des moyens de mise à l'air sélective dudit espace clos, reliés à ladite unité de pilotage pour leur commutation entre un état passant et un état bloquant ; et
- lesdits moyens de connexion sélective du réservoir et lesdits moyens de mise à l'air sélective dudit espace clos comportent une vanne trois-voies dont une première voie est reliée audit espace clos, une deuxième voie est reliée au réservoir et la troisième voie est mise à l'air, la vanne comportant un sélecteur mobile entre une première position dans laquelle les trois voies sont obturées, une deuxième position dans laquelle les première et deuxième voies sont mises en communication, la troisième voie étant obturée et une troisième position dans laquelle les première et troisième voies sont mises en communication, la deuxième voie étant obturée.

L'invention sera mieux comprise à la lecture de la description qui va suivre, donnée uniquement à titre d'exemple et faite en se référant aux dessins, sur lesquels :
- la figure 1 est une vue schématique en coupe longitudinale d'un exemple d'ensemble à roue ;
- la figure 2 est une vue identique à celle de la figure 1 d'une première variante de l'ensemble à roue de la figure 1 ;
- la figure 3 est une vue identique à celle de la figure 1 d'une deuxième variante de l'ensemble à roue de la figure 1 ; et selon l'invention
- la figure 4 est une vue identique à celle de la figure 1 d'une troisième variante de l'ensemble à roue de la figure 1 ;

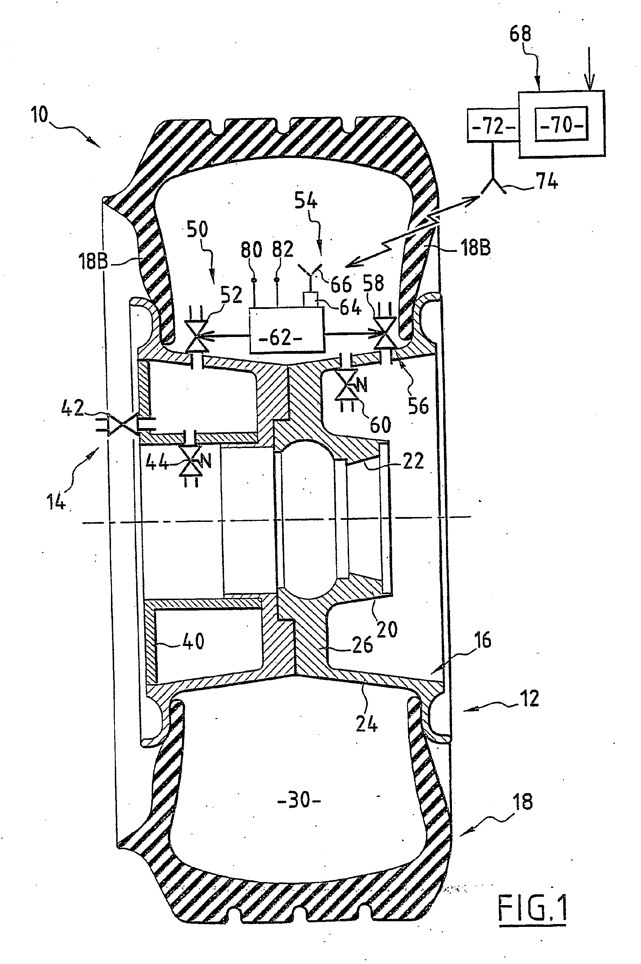

L'ensemble à roue 10 représenté sur la figure 1 est destiné à être utilisé sur le train d'atterrissage d'un avion. Cet ensemble à roue comporte une roue 12 et une installation autonome 14 de gonflage de la roue.

La roue 12 comporte une jante 16 sur laquelle est monté un pneumatique 18. La jante 16 comporte un moyeu 20 traversé de part en part par un passage 22 dans lequel s'étend une fusée de roue, non représentée, solidaire du train d'atterrissage de l'avion.

La jante 16 comporte une couronne extérieure 24 de support du pneumatique. Le moyeu 20 et la couronne 24 sont reliés l'un à l'autre par des bras radiaux 26.

Entre la couronne extérieure 24 de la jante et le pneumatique 18 est défini un espace annulaire clos 30 gonflé d'un gaz sous pression tel que de l'air. La pression normale de gonflage pour une température de 25°C est par exemple de 15 bars.

Le dispositif autonome 14 de gonflage du pneumatique comporte un réservoir 40 de stockage d'un gaz sous pression, notamment de l'azote, pour le gonflage du pneumatique 18. Initialement, c'est-à-dire après remplissage et avant utilisation, la pression dans le réservoir est de 60 bars pour une température de 25°C. Le réservoir est solidaire en rotation de la roue 12 et plus précisément de la jante 16.

Le réservoir 40 présente une forme toroïdale et est fixé sur la jante 26 par exemple de manière amovible par boulonnage. Le réservoir 40 et la jante 16 sont disposés coaxialement l'un à l'autre suivant l'axe de la roue.

Le réservoir comporte une valve 42 de remplissage et une soupape de sécurité 44 adaptées pour un écoulement vers l'extérieur du gaz contenu dans le réservoir, lorsque la pression dans le réservoir est supérieure à 95 bars.

En outre, des moyens 50 de connexion sélective du réservoir 40 et de l'espace clos 30 sont prévus. Ces moyens 50 comportent une électrovanne 52 assurant la liaison de l'intérieur du réservoir 40 et de l'espace clos 30 au travers de la couronne extérieure 24 de la jante.

Cette électrovanne 52 est reliée à une unité de pilotage désignée par la référence générale 54.

De même, des moyens 56 de mise à l'air de l'espace clos 30 sont implantés dans l'ensemble à roue. Ces moyens comportent une électrovanne 58 assurant la liaison de l'espace clos 30 au milieu ambiant au travers de la couronne extérieure 24 de la jante. L'électrovanne 58 est également reliée à l'unité de pilotage 54.

En outre, une soupape de sécurité 60 est montée au travers de la couronne 24 de la jante pour assurer une mise à l'air automatique de l'espace clos 30 lorsque la pression dans le pneu est supérieure à 20 bars.

L'unité de pilotage 54 comporte une unité de commande 62 solidarisée en rotation à la jante 16 et à laquelle sont connectées les électrovannes 52, 58 pour leur alimentation en courant et leur commutation entre un état passant et un état bloquant. Cette unité de commande 62 comporte des moyens de mise en forme du courant d'alimentation des électrovannes pour leur commutation.

En outre, l'unité de commande 62 est reliée à une interface de communication 64 destinée notamment à la réception d'ordres de commande et à l'envoi de valeurs de mesure. L'interface 64 comporte une antenne 66.

L'unité de pilotage 54 comporte en outre une unité de traitement d'informations déportée 68. Cette dernière est indépendante en rotation de la jante 14 et est par exemple fixée à la structure de l'avion.

Cette unité de traitement d'informations 68 comporte un calculateur 70. Elle est reliée à une interface 72 de communication équipée d'une antenne 74 et adaptée pour établir une liaison hertzienne bidirectionnelle avec interface de communication 64 au travers de l'antenne 66.

L'unité de traitement d'informations 70 est reliée à d'autres éléments fonctionnels de l'avion pour recevoir des consignes de gonflage des pneumatiques. Le calculateur 70 est adapté pour mettre en oeuvre des algorithmes de détermination d'ordres de commande adressés à l'unité de commande 62 en fonction des informations reçues.

En outre, l'ensemble à roue comporte un capteur de pression 80 et un capteur de température 82 implantés dans l'espace clos 30. Ces capteurs sont tous deux reliés à une interface de communication afin de permettre la transmission des valeurs mesurées vers l'unité de traitement d'informations 68. Dans l'exemple considéré, l'interface de communication à laquelle sont reliés les capteurs est celle de l'unité de commande. Toutefois, celle-ci pourrait être différente.

L'ensemble à roue selon l'invention fonctionne de la manière suivante.

La pression et la température à l'intérieur de l'espace clos 30 sont mesurées en permanence lors des phases de pré-décollage et les phases de pré-atterrisage. En revanche, les mesures sont inhibées lorsque le train d'atterrissage est rentré afin d'économiser l'énergie nécessaire au fonctionnement des capteurs.

Les valeurs mesurées de pression P et de température T sont adressées à l'unité de traitement d'informations 68 par les moyens complémentaires de communication sans fil.

L'unité de traitement d'informations 68 reçoit par ailleurs une consigne Pu de pression de gonflage des pneus depuis d'autres éléments fonctionnels de l'avion.

Le calculateur 70 corrige la pression mesurée P en fonction de la température mesurée T, afin de ramener la valeur de pression dans des conditions anormales de température, c'est-à-dire pour une température de 25°. La pression corrigée ainsi obtenue notée P_{c} est comparée à la pression de consigne Pu reçue par l'unité de traitement d'informations 68.

Si la pression corrigée P_{c} est supérieure à la pression de consigne, l'unité de traitement d'informations 68 adresse à l'unité de commande 62 un ordre d'ouverture de la vanne 58 de mise à l'air afin de provoquer un écoulement du gaz contenu dans l'espace clos 30 vers l'extérieur. La vanne 58 est refermée lorsque la pression corrigée P_{c} atteint la pression de consigne Pu.

En revanche, si la valeur de pression corrigée P_{c} est inférieure à la valeur de pression de consigne Pu, l'unité de commande 62 reçoit de l'unité de traitement d'informations 68 un ordre pour provoquer l'ouverture de la vanne 52 afin d'assurer un écoulement d'azote depuis le réservoir 40 jusque dans l'espace clos 30. La vanne 52 est refermée lorsque la pression corrigée P_{c} de l'espace clos 30 atteint la pression de consigne Pu.

On conçoit que la présence du réservoir 40 de gaz sous pression sur la partie tournante de la roue permet d'éviter des raccordements complexes entre l'espace clos délimité par le pneumatique et une réserve de gaz solidaire du véhicule.

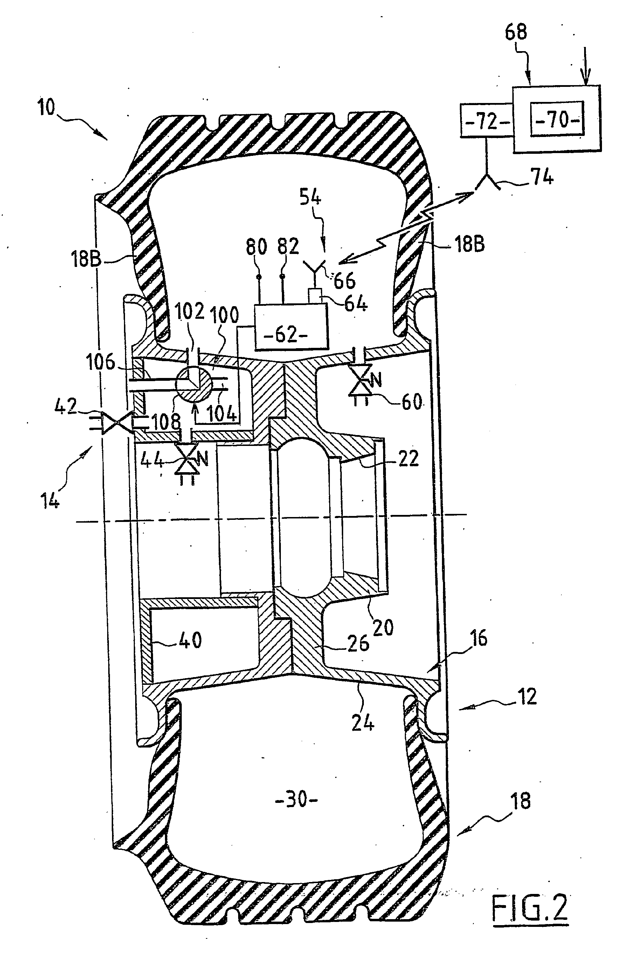

Sur les figures 2 à 4 sont représentées des variantes de réalisation de l'ensemble à roue de la figure 1. Sur ces figures, les éléments identiques ou analogues à ceux de la figure 1 sont désignés par les mêmes numéros de référence.

Dans le mode de réalisation de la figure 2, les moyens de connexion sélective 50 et les moyens de mise à l'air 56 comportent une unique vanne trois-voies à trois positions en remplacement des vannes 52 et 58.

La vanne trois-voies désignée par la référence générale 100 est disposée par exemple dans le réservoir 40. Une première voie 102 est reliée à l'espace clos 30 au travers de la couronne 24. Une deuxième voie 104 est reliée à l'intérieur du réservoir 40 alors que la troisième voie 106 est reliée à l'air ambiant.

Le sélecteur de la vanne, constitué par exemple d'un tiroir rotatif 108 est adapté pour, dans une première position, assurer l'obturation des trois voies 102, 104, 106. Dans une seconde position, les première et deuxième voies 102, 104 sont reliées l'une à l'autre, la troisième voie 106 étant obturée, de sorte que le gaz sous pression contenu dans le réservoir 40 peut s'écouler dans l'espace clos 30 défini par le pneumatique.

Dans une troisième position, les première et troisième voies 102, 106 sont reliées, la deuxième voie 104 étant obturée, de sorte que l'espace clos 30 est relié au milieu ambiant, permettant ainsi l'écoulement du gaz de l'intérieur de l'espace clos 30 jusque dans l'atmosphère.

Le sélecteur 108 de la vanne trois-voies est commandé depuis l'unité de commande 62 pour son déplacement entre ses trois positions, en fonction de l'ordre de commande reçu de l'unité de traitement d'informations 68.

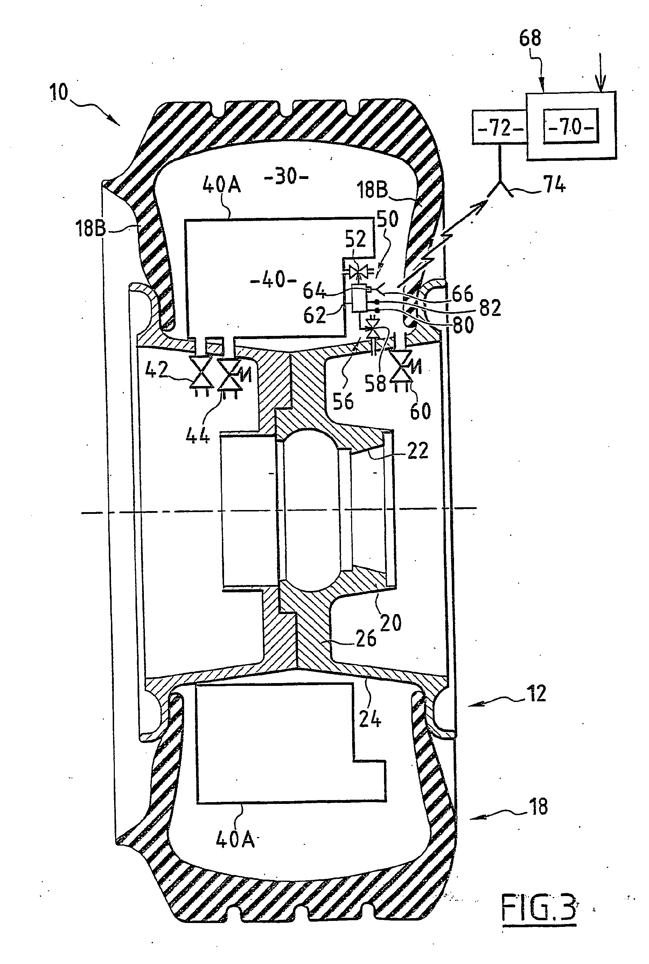

Dans le mode de réalisation de la figure 3, le réservoir 40 est disposé non pas le long des bras 26 de la jante à l'extérieur du pneumatique mais à l'intérieur de l'espace clos 30. Le réservoir 40 est ainsi disposé entre les deux flancs notés 18A, 18B du pneumatique.

Dans ce cas, la valve de remplissage 42 du réservoir et la soupape de sécurité 44 sont disposées au travers de la couronne extérieure 24 de la jante alors que la vanne 52 des moyens de connexion sélective du réservoir 40 et de l'espace clos 30 est disposée directement en sortie du réservoir dans l'espace clos 30.

Dans ce mode de réalisation, le réservoir toroïdal 40 disposé dans l'espace 30 définit une surface d'appui 40A pour la bande de roulement du pneu en cas de crevaison qui permet un maintien en forme du pneumatique dégonflé.

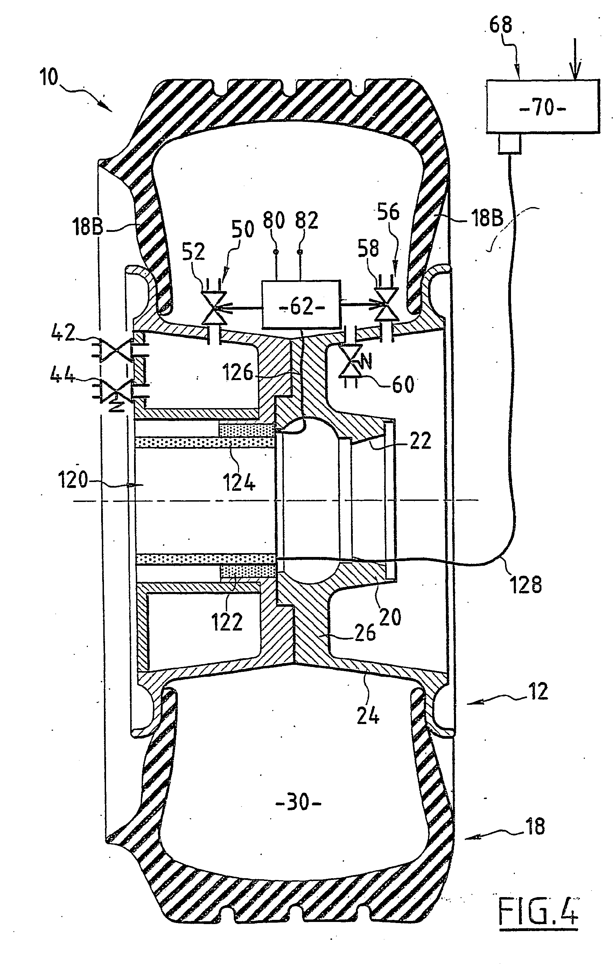

Le mode de réalisation de la figure 4 diffère de celui de la figure 1 seulement en ce que la communication entre l'unité de traitement d'informations 68 et l'unité de commande 62 est réalisée non pas par voie hertzienne mais au travers d'un transformateur tournant désigné par la référence générale 120.

Ce transformateur comporte un premier bobinage 122 solidaire en rotation de la jante 16. Il comporte en outre un second bobinage 124 disposé à l'intérieur du premier bobinage 122, les deux bobinages étant disposés coaxialement suivant l'axe de la roue. Le second bobinage 124 est solidaire de la fusée de roue non représentée.

Le premier bobinage 122 est relié au dispositif de commande 62 par une liaison filaire 126. Le second bobinage 124 est, pour sa part, relié par une liaison filaire 128 à l'unité de traitement d'informations 68.

Dans ce mode de réalisation, les mesures effectuées par les capteurs 80, 82 et les ordres de commande sont véhiculés par les liaisons filaires 124, 126 et sont transmis de la partie fixe à la partie tournante au travers du transformateur tournant 120.

## Revendications

1. Ensemble à roue de véhicule comportant une jante (16) et un pneumatique (18) définissant entre eux un espace clos (30) empli d'un gaz sous pression, un réservoir (40) de gaz sous pression et des moyens (50) de connexion sélective du réservoir de gaz sous pression (40) et de l'espace clos (30) défini entre la jante (16) et le pneumatique (18), le réservoir de gaz sous pression (40) étant solidaire en rotation de la jante (16), **caractérisé en ce que** le réservoir (40) est disposé entre des flancs (18A, 18B) du pneumatique (18) dans l'espace annulaire (30) défini entre le pneumatique (18) et la jante (16).

2. Ensemble à roue selon la revendication 1, **caractérisé en ce que** le réservoir (40) est empli d'azote.

3. Ensemble à roue selon l'une quelconque des revendications précédentes, **caractérisé en ce qu'**il comporte une unité de pilotage (54) reliée aux moyens (50) de connexion sélective du réservoir de gaz (40) et de l'espace clos (30) pour leur commutation entre un état passant et un état bloquant.

4. Ensemble à roue selon la revendication 3, **caractérisé en ce qu'**il comporte un capteur (80) de mesure de la pression à l'intérieur dudit espace clos (30), et **en ce que** ladite unité de pilotage (54) est adaptée pour la commutation desdits moyens de connexion (50) en fonction de la pression dans ledit espace clos (30).

5. Ensemble à roue selon la revendication 3 ou 4, **caractérisé en ce qu'**il comporte un capteur (82) de température, et **en ce que** ladite unité de pilotage (54) est adaptée pour la commutation desdits moyens de connexion (50) en fonction de la température mesurée par le capteur (82).

6. Ensemble à roue selon l'une quelconque des revendications précédentes, **caractérisé en ce que** ladite unité de pilotage (54) comporte :
- une unité de traitement d'informations déportée (68), indépendante en rotation de la jante (16) ;
- une unité (62) de commande des moyens (50) de connexion sélective du réservoir (40) et de l'espace clos (30), ladite unité de commande (62) étant solidaire en rotation de la jante (16) ; et
- des moyens complémentaires de communication sans fil (64, 66, 72, 74 ; 122, 124) connectés, d'une part, à ladite unité de traitement d'informations (68) et, d'autre part, à ladite unité de commande (62) pour la transmission d'ordres de commande de ladite unité de traitement d'informations (68) à l'unité de commande (62).

7. Ensemble à roue selon la revendication 4 ou 5 et la revendication 6 prises ensemble, **caractérisé en ce qu'**il comporte des moyens complémentaires de communication sans fil (64, 66, 72, 74 ; 122, 124) connectés, d'une part, au ou à chaque capteur (80, 82) et, d'autre part, à ladite unité de traitement d'informations (68) pour la transmission de valeurs de mesure du ou de chaque capteur (80, 82) à ladite unité de traitement d'informations (68).

8. Ensemble à roue selon la revendication 6 ou 7, **caractérisé en ce que** lesdits moyens complémentaires de communication comportent un transformateur tournant (120) comportant deux bobinages (122, 124) montés en rotation l'un par rapport à l'autre, l'un des bobinages (122) étant solidaire en rotation de la jante (16).

9. Ensemble à roue selon la revendication 6 ou 7, **caractérisé en ce que** lesdits moyens complémentaires de communication comportent deux antennes (66, 74) dont l'une est solidaire en rotation de la jante (16) et dont l'autre reliée à l'unité de traitement d'informations (68) est indépendante en rotation de la jante (16) et est située à distance de cette-ci

10. Ensemble à roue selon l'une quelconque des revendications 3 à 9, **caractérisé en ce qu'**il comporte des moyens (56) de mise à l'air sélective dudit espace clos (30), reliés à ladite unité de pilotage (54) pour leur commutation entre un état passant et un état bloquant.

11. Ensemble à roue selon la revendication 10, **caractérisé en ce que** lesdits moyens (50) de connexion sélective du réservoir (40) et lesdits moyens (56) de mise à l'air sélective dudit espace clos (30) comportent une vanne trois-voies (100) dont une première voie (102) est reliée audit espace clos (30), une deuxième voie (104) est reliée au réservoir (40) et la troisième voie (106) est mise à l'air, la vanne (100) comportant un sélecteur (108) mobile entre une première position dans laquelle les trois voies sont obturées, une deuxième position dans laquelle les première (102) et deuxième (104) voies sont mises en communication, la troisième voie (106) étant obturée et une troisième position dans laquelle les première (102) et troisième (106) voies sont mises en communication, la deuxième voie (104) étant obturée.

## Claims

1. A vehicle wheel assembly comprising a rim (16) and tyre (18) defining between them a closed space (30) filled with a pressurised gas, a reservoir (40) for pressurised gas and means (50) for selectively connecting the reservoir (40) for pressurised gas and the closed space (30) defined between the rim (16) and the tyre (18), the reservoir (40) for pressurised gas being rotatable with the rim (16), **characterised in that** the reservoir (40) is disposed between the walls (18A, 18B) of the tyre (18) in the annular space (30) defined between the tyre (18) and the rim (16).

2. Wheel assembly according to claim 1, **characterised in that** the reservoir (40) is filled with nitrogen.

3. Wheel assembly according to one of the preceding claims, **characterised in that** it comprises a control unit (54) connected to the means (50) for selectively connecting the reservoir for gas (40) and the closed space (30) to switch it between an open state and a closed state.

4. Wheel assembly according to claim 3, **characterised in that** it comprises a sensor (80) for measuring the pressure inside the said closed space (30), and **in that** the said control unit (54) is adapted to switch the said connecting means (50) as a function of the pressure in the closed space (30).

5. Wheel assembly according to claim 3 or claim 4, **characterised in that** it comprises a temperature sensor (82), and **in that** the said control unit (54) is adapted to switch the said connecting means (50) as a function of the temperature measured by the sensor (82).

6. Wheel assembly according to any of the preceding claims, **characterised in that** the said control unit (54) comprises:
- an external data processing unit (68), independent of rotation of the rim (16);
- a control unit (62) for the means (50) for selectively connecting the reservoir (40) and the closed space (30), the said control unit (62) being rotatable with the rim (16); and
- further means for wireless communication (64,66,72,74;122,124) connected on the one hand to the said data processing unit (68) and on the other hand to the said control unit (62) for transmission of control signals from the said data processing unit (68) to the control unit (62).

7. Wheel assembly according to claim 4 or claim 5 taken together with claim 6, **characterised in that** it comprises the further means for wireless communication (64,66,72,74; 122,124) connected on the one hand to the or each sensor (80,82) and on the other hand to the said data processing unit (68) for transmitting the values measured by the or each sensor (80,82) to the said data processing unit (68).

8. Wheel assembly according to claim 6 or claim 7, **characterised in that** the said further means for communication comprise a rotatable transformer (120) comprising two coils (122,124) mounted for relative rotation, one of the coils (122) being rotatable with the rim (16).

9. Wheel assembly according to claim 6 or claim 7, **characterised in that** the said further means for communication comprise two antennas (66,74) of which one is rotatable with the rim (16) and other, connected to the data processing unit (68) is independent of the rotation of the rim (16) and is situated at a distance from the rim.

10. Wheel assembly according to one of claims 3 to 9, **characterised in that** it comprises means (56) for selectively admitting air to the said closed space (30), and connected to the control unit (54) for switching between an open state and a closed state.

11. Wheel assembly according to claim 10, **characterised in that** the said means (50) for selective connection to the reservoir (40) and the said means (56) for selectively admitting air to the said closed space (30) comprise a three-way valve (100) of which a first line (102) is connected to the said closed space (30), a second line (104) is connected to the reservoir (40) and the third line (106) is connected to air, the valve (100) comprising a selector (108) movable between a first position in which the three lines are closed, a second position in which the first and second lines (102, 104) are placed in communication, and the third line (106) is closed, and a third position in which the first and third lines (102,106) are placed in communication and the second line (104) is closed.

## Patentansprüche

1. Fahrzeug-Radanordnung, umfassend eine Felge (16) und einen Luftreifen (18), die untereinander einen geschlossenen Raum (30) definieren, der mit einem Druckgas gefüllt ist, einen Behälter (40) für Druckgas und Mittel (50) zum selektiven Anschließen des Druckgasbehälters (40) und des zwischen der Felge (16) und dem Luftreifen (18) definierten geschlossenen Raumes (30), wobei der Druckgasbehälter (40) mit der Felge (16) drehfest ist, **dadurch gekennzeichnet, dass** der Behälter (40) zwischen Flanken (18A,18B) des Luftreifens (18) in dem ringförmigen Raum (30), der zwischen dem Luftreifen (18) und der Felge (16) definiert ist, angeordnet ist.

2. Radanordnung nach Anspruch 1, **dadurch gekennzeichnet, dass** der Behälter (40) mit Stickstoff gefüllt ist.

3. Radanordnung nach einem der vorhergehenden Ansprüche, **dadurch gekennzeichnet, dass** er eine Ansteuerungseinheit (54) umfasst, die mit den Mitteln (50) zum selektiven Anschließen des Gasbehälters (40) und des geschlossenen Raumes (30) verbunden ist, um sie zwischen einem durchlassenden Zustand und einem blockierenden Zustand umzuschalten.

4. Radanordnung nach Anspruch 3, **dadurch gekennzeichnet, dass** sie einen Sensor (80) zum Messen des Drucks im Innern des geschlossenen Raumes (30) umfasst, und dass die Ansteuerungseinheit (54) geeignet ist für die Umschaltung der Anschlussmittel (50) in Abhängigkeit von dem Druck in dem geschlossenen Raum (30).

5. Radanordnung nach Anspruch 3 oder 4, **dadurch gekennzeichnet, dass** sie einen Temperatursensor (82) umfasst, und dass die Ansteuerungseinheit (54) geeignet ist für die Umschaltung der Anschlussmittel (50) in Abhängigkeit von der von dem Sensor (82) gemessenen Temperatur.

6. Radanordnung nach einem der vorhergehenden Ansprüche, **dadurch gekennzeichnet, dass** die Ansteuerungseinheit (54) folgendes umfasst:
- eine entfernte Informationsverarbeitungseinheit (68), die von der Felge (16) drehmäßig unabhängig ist;
- eine Einheit (62) zum Steuern der Mittel (50) zum selektiven Anschließen des Behälters (40) und des geschlossenen Raumes (30), wobei die Steuerungseinheit (62) mit der Felge (16) drehfest ist; und
- zusätzliche drahtlose Kommunikationsmittel (64,66, 72,74;122,124), die einerseits an die Informationsverarbeitungseinheit (68) und andererseits an die Steuerungseinheit (62) angeschlossen sind für die Übertragung von Steuerbefehlen von der Informationsverarbeitungseinheit (68) an die Steuerungseinheit (62).

7. Radanordnung nach Anspruch 4 oder 5 und Anspruch 6 zusammengenommen, **dadurch gekennzeichnet, dass** sie ergänzende drahtlose Kommunikationsmittel (64,68,72,74; 122,124) umfasst, die einerseits an den bzw. jeden Sensor (80,82) und andererseits an die Informationsverarbeitungseinheit (68) angeschlossen sind für die Übertragung von Messwerten von dem bzw. jedem Sensor (80,82) an die Informationsverarbeitungseinheit (68).

8. Radanordnung nach Anspruch 6 oder 7, **dadurch gekennzeichnet, dass** die ergänzenden Kommunikationsmittel einen Drehtransformator (120) umfassen, der zwei Wicklungen (122,124) umfasst, die zueinander drehbar gelagert sind, wobei eine der Wicklungen (122) mit der Felge (16) drehfest ist.

9. Radanordnung nach Anspruch 6 oder 7, **dadurch gekennzeichnet, dass** die ergänzenden Kommunikationsmittel zwei Antennen (66,74) umfassen, von denen eine mit der Felge (16) drehfest ist und von denen die andere, die mit der Informationsverarbeitungseinheit (68) verbunden ist, von der Felge (16) drehmäßig unabhängig ist und sich von dieser entfernt befindet.

10. Radanordnung nach einem der Ansprüche 3 bis 9, **dadurch gekennzeichnet, dass** sie Mittel (56) zum selektiven Belüften des geschlossenen Raumes (30) umfasst, die mit der Ansteuerungseinheit (54) verbunden sind für ihre Umschaltung zwischen einem durchlassenden Zustand und einem blockierenden Zustand.

11. Radanordnung nach Anspruch 10, **dadurch gekennzeichnet, dass** die Mittel (50) zum selektiven Anschließen des Behälters (40) und die Mittel (56) zum selektiven Belüften des geschlossenen Raumes (30) ein Dreiwegeventil (100) umfassen, dessen erster Weg (102) mit dem geschlossenen Raum (30) verbunden ist, dessen zweiter Weg (104) mit dem Behälter (40) verbunden ist und dessen dritter Weg (106) belüftet wird, wobei das Ventil (100) einen Wahlschalter (108) umfasst, der zwischen einer ersten Position, in der die drei Wege verschlossen sind, einer zweiten Position, in welcher der erste (102) und der zweite Weg(104) in Verbindung gesetzt werden, wobei der dritte Weg (106) verschlossen ist, und einer dritten Position, in der die ersten (102) und dritten Wege (106) in Verbindung gesetzt werden, wobei der zweite Weg (104) verschlossen ist, bewegbar ist.
